# EUROPEAN PATENT APPLICATION

(11) **EP 2 530 659 A1**
(43) Date of publication of application: **05.12.2012**
(21) Application number: 10844464.7
(22) Date of filing: 02.12.2010
(51) Int. Cl.: G07D 7/00, G06K 9/20, G07D 7/12

(54) **METHOD AND DEVICE FOR OBTAINING PAPER CURRENT OR FINANCIAL BILL NUMBER, AND RECOGNITION METHOD AND DEVICE FOR PAPER CURRENCY OR FINANCIAL BILL NUMBER**

(30) Priority: 29.01.2010 CN 201010104234
(71) Applicant: Beijing Nufront Software Science Tech. Co., Ltd, Haidian District, Beijing 100084 (CN)
(72) Inventor: TANG, Hui, Beijing 100084 (CN); CHENG, Hejian, Beijing 100084 (CN); BAO, Dongshan, Beijing 100084 (CN)
(74) Representative: Lawrence, Richard Anthony
(86) International application number: PCT/CN2010/079379
(87) International publication number: WO 2011/091687

(57) **Abstract**

A method and device for obtaining paper currency or ticket number, and a recognition method and device for paper currency or ticket number are provided. The method for obtaining paper currency or ticket number involves providing number capturing devices on predetermined positions of a paper currency or ticket conveying passage according to a layout position of the number, and includes: capturing images of areas where the number may appear when the paper currency or ticket to be detected arrives at the predetermined positions (S101, S102); detecting the area images, determining whether the area images contain the paper currency number (S103); extracting the number from the images (S104). The device for obtaining paper currency or ticket number includes image capturing units (310, 410), a detecting unit (320, 420), and a number extracting unit (330,430). The recognition method and device for paper currency or ticket number further include respectively a recognition step and a recognition unit (440) for recognizing the number.

## Description

This application claims the right of priority of Chinese Patent Application No. 201010104234.2, filed on January 29, 2010, entitled "Method and device for obtaining paper currency or ticket number, and recognition method and device", which is hereby incorporated by reference in its entirety.

### Field of the Invention

The present invention relates to the field of information and image, and particularly to a method and device for obtaining paper currency or ticket number, and recognition method and device for paper currency or ticket number.

### Background of the Invention

The serial number (or crown word number) printed on paper currency or bill is a unique symbol identifying the identity of single paper currency or bill. Besides special anti-false identity, such as watermark, in paper money (or other securities or bill) management, recognizing the serial number (or crown word number) of various paper currency or bill becomes an important means for paper currency or bill management and certain degree of authenticity determination. In the entire life cycle of paper currency, various mechanical devices, for example, bill counter or bill validator, which the paper currency is required to pass all have requirements for recognizing the paper money serial number of the paper currency.

Generally, when reading the serial number printed on paper currency (or bill), the device delivering the paper currency is required to capture the full paper currency on both sides in the passage through which the paper currency passes, so as to get the full image of the paper currency or bill, usually by line scanning image sensor, which line by line scans the paper currency utilizing the velocity when it passes to get its full image, learns the position and digits of number in accordance with the prior knowledge such as type, facing direction and size of the paper currency or bill known or obtained from pre-stage device, and obtains the serial number information of the paper currency or bill by the process of feature location, removing background noise, binarization and so on in the full image of the paper currency or bill and then by different OCR (Optical Character Recognition) algorithm. For example, a paper currency serial number reading device is disclosed in a Chinese patent document whose patent number is 200410001365.2. The device makes the paper currency twice pass an image module from the obverse side and the reverse side by mechanical part, and the denomination and facing direction information of the paper currency is recognized when it is passed the image module for the first time and is provided for backend to use as prior knowledge. After the paper currency for the first time passes the image module and the above information is cached, and then when it for the second time is passed the image module in the negative direction, different light sources is chosen to be driven in accordance with the known denomination and facing direction information in superior to obtain the better effects of background removing so as to raise the recognition level for recognizing the serial number of the paper currency. Similar methods are all required to dispose particular hardware device for recognizing the denomination and facing direction at the frontend of the paper currency, which raises the hardware cost, or required to reduce the velocity of the paper currency recognition. For example, in the above Chinese patent whose patent number is 200410001365.2, the paper currency is required to twice pass the image recognition module from the obverse side and the reverse side, so that the paper currency recognition speed is reduced by more than one time, thereby, it is not the best solution for obtaining the paper currency number. Also, in the prior art, the scanning sensor is usually used for line by line scanning to obtain the full image of the paper currency so as to obtain anti-false identity and number and other related information, causing a great deal of redundant information to be stored and processed.

On the other hand, some countries prescribe that the automated teller machine (ATM) and other device for withdrawing Euro paper currency have an obligation to record the depositor depositing paper currency and the record numbers of the paper currency deposited by the depositor. In this case, the uncontaminated digits in contaminated paper currency serial number are usually needed to be recognized as far as possible, while the contaminated site is represented by special marks so as to retain the paper currency information to the greatest extent. The Chinese patent whose patent number is 200410001365.2 discloses a paper currency serial number reading method, in which characters within identifiable scope of the record numbers may be recognized by processing as simple as possible for subsequent processing when scribbling or contamination etc. exists on the portion of the record number or a frame error occurs. When relying solely on image recognition technology, the recognition for paper money only reaches a certain fixed level.

In the solution of recognition record paper currency serial number provided by prior art, utilizing the line scanning image sensor to scan paper currency when it passes to obtain a full image of the paper currency, it is required to utilize a mechanical device for ensuring the paper currency pass the image sensor twice so as to obtain the information of denomination and facing direction etc. of the paper currency for the first time, or it is required to add hardware module before the paper currency passing the line scanning image sensor so as to obtain the prior knowledge such as denomination and facing direction of the paper currency for subsequent processing. Thus, the processing burden of the system is increased because most of the information is redundant information. Specific to serial number recognition, the redundant information is at least three to five times more than useful information.

In the prior art, full scanning is used, which relatively reduces the resolution of the useful information.

The line scanning image sensor is sensitive to the passing velocity of the paper currency to be detected, because when the paper currency passing the sensor the velocity will produce local and tiny change or when the jitter occurs a big impact will be made on the image quality, directly causing consistency and recognition rate are reduced.

It is required to add a hardware module to let paper currency pass identical image module twice. The denomination and facing direction information of the paper currency is obtained for the first time and the number of the paper currency is obtain for the second time, which apparently increases the hardware cost and the operate efficiency is definitely reduced when multiple paper currencies is detected continuously.

The prior paper currency serial number recognition and record method does not recognize the whole serial number partially contaminated, recognizes the uncontaminated part and marks the part which is unable to be recognized, or utilizing the characteristic that certain paper money faces have multiple numbers recognizes and compares multiple numbers by multiple image recognition parts to solve part of the contamination problem or recognizes them for several times to raise recognition rate. The problem of the method is that it fails to fully utilize the convenience of machinery or operation process.

However, in some particular field, utilizing the convenience of machinery or operation so that paper currency can be recognized for several times and adding a checking process can further improve the recognition accuracy of paper money serial number by a level. The work on this aspect is almost in blank.

### Summary of the Invention

In view of the above circumstance, the technical problem to be solved by the present invention is to provide a method and device for obtaining paper currency or ticket number, and a recognition method and device for paper currency or ticket number, which can obtain paper currency or ticket number rapidly for discriminating and managing paper currencies and tickets.

The embodiment of this invention provides a paper currency or ticket number obtaining method, wherein a number capturing device is disposed at a predetermined site on a paper currency or ticket conveying passage in accordance with a layout position of a paper currency or ticket number, the method comprises:
Capturing images of number areas of the paper currency or ticket when the paper currency or ticket to be detected arrives at a predetermined position, wherein the number areas are areas where the number can occur;
Detecting the captured number area images and determining whether the number area images contain the paper currency or ticket number; and if the paper currency or ticket number is contained, extracting the number from the images containing the paper currency or ticket number.

If the number area images do not contain the number, changing the facing direction of the paper currency or ticket and capturing number area images on the other side of the paper currency or ticket; and
If the number area images contain the number, extract the number.

The embodiment of this invention further provides a paper currency or ticket recognition method, which comprises:
Getting a paper currency or ticket number by using the above paper currency or ticket number obtaining method;
Recognizing the got paper currency or ticket number; and

Performing subsequent process in accordance with recognition results of the number.

The embodiment of this invention provides a paper currency or ticket number obtaining device, which comprises:
Image capturing units for capturing number area images of a paper currency or ticket at predetermined site on a paper currency conveying passage in accordance with a layout position of a paper currency or ticket number;

A detecting unit for detecting whether the number area images contain the paper currency or ticket number; and

A number extracting unit for extracting the paper currency or ticket number from the number area images;

If the detecting unit determines that the number area images contain the paper currency or ticket number, the number extracting unit extracts the paper currency or ticket number from the images.

The embodiment of this invention further provides a paper currency or ticket recognition device, which comprises:

Image capturing units for capturing number area images of a paper currency or ticket at predetermined site on a paper currency or ticket conveying passage in accordance with a layout position of a paper currency or ticket number;

A detecting unit for detecting whether the number area images contain the number;

A number extracting unit for extracting the number from the number area images;

If the detecting unit determines that the number area images contain the number, the number extracting unit extracts the number from the images; and

A recognition unit for recognizing the extracted number so as to provide the recognition results for subsequent processing.

In the method and device for obtaining paper currency or ticket number provided by this invention, a number capturing device is disposed at a "necessary path" of paper currency serial number for capturing the area images where the number on paper currency or ticket can occur. Thus, only the areas that can contain number are exacted so that redundant information quantity need to be processed is minimum and the resolution in area to be recognized, thereby increasing information quantity and improving recognition accuracy. This invention obtains a plurality of images from a plurality of areas where number can occur and selects one or more area correctly containing number just by simply processing for further processing, without adding hardware module or letting paper currency pass image recognition module twice to get denomination and facing direction information in advance. This invention also uses an image sensor which can be triggered to take photos and overall exposure output, which is maximumly compatible with the case of image quality degradation brought by velocity changing and jitter when paper currency passes the image module, ensuring number recognition has a large consistency and much higher velocity and recognition rate. This invention can still raise recognition rate level of the system as a whole by the convenience brought by operation flow and mechanism structure and by performing recognition for several times for the same number area.

### Brief Description of the Drawings

FIG. 1 is a principle schematic diagram of a paper currency number obtaining device provided by an embodiment of this invention;
FIG. 2 is an installation schematic diagram of a number capturing device in an embodiment of this invention;
FIG. 3 is a flow chart of a paper currency number obtaining method provided by an embodiment of this invention;
FIG. 4 is a flow chart of a paper currency detecting provided by the first embodiment of this invention;
FIGS. 5a and 5b are installation schematic diagrams of a number capturing device in the third embodiment of this invention
FIG. 6 is a flow chart of a paper currency number obtaining method provided by the third embodiment of this invention;
FIG. 7 is a schematic diagram of a paper currency number obtaining device provided by the fourth embodiment of this invention; and
FIG. 8 is a schematic diagram of a paper currency number recognition device provided by the fifth embodiment of this invention.

### Detailed Description of Preferential Embodiments

In view of the problems and shortcomings in the prior art, the present invention provides a method and device for obtaining paper currency number, and a recognition device for paper currency. Actually, the information really needing to be obtained on the paper currency, such as anti-false identity and number, is just a part, while obtaining full paper currency image causes a great deal of redundant information to be stored and processed, consuming time and makes resolution of really effective information not high relatively, being low processing efficiency and not economical.

This present invention provides a method and device for obtaining paper currency serial number, which designs structure in advance based on number layout on paper currency, disposing a number capturing device at a "necessary path" of paper currency serial number for capturing the area images where the number on paper currency or can occur. Thus, only the areas that can contain number are exacted so that redundant information quantity need to be processed is minimum and the resolution in area to be recognized, thereby increasing information quantity and improving recognition accuracy. This invention obtains images of some areas only with a plurality of positions where number can occurs to perform corresponding process, without adding hardware module or letting paper currency pass image recognition module twice to get denomination and facing direction information of paper money in advance, that is, the denomination and facing direction information of paper money can be obtained in case that the paper currency passes at a time with same hardware, thereby selecting one or more of images containing number (depending on layout situation of paper money number) to perform number process. As an embodiment, but not to be limited to the embodiment, an image captor which can be triggered to take photos and overall exposure output is selected as an image capturing device, which can be maximumly compatible with the problem of image quality degradation brought by velocity changing and jitter when paper currency passes the image module, ensuring number recognition has a large consistency and much higher velocity and recognition rate.

In addition, this invention raises recognition rate level of the system as a whole by the convenience brought by operation flow and mechanism structure and performing recognition for several times for same number area.

To make the principle, characteristic, and advantages of this invention more clear, the present invention will be described hereinafter in conjunction with the embodiments, taking paper currency as an example.

### The first embodiment

In this embodiment, first, a number capturing device is predisposed at predetermined site on a paper money conveying passage in accordance with the layout of paper currency number and the position of the paper currency number on the layout. Specifically, the number capturing device, for example, image sensor, is disposed at "necessary path" of paper currency serial number, which only extracts the image in area which can include numbers (called "number area"). The range of the number area is determined in accordance with the size of the paper currency number and just making sure all the number can occur in the area when it normally pass.

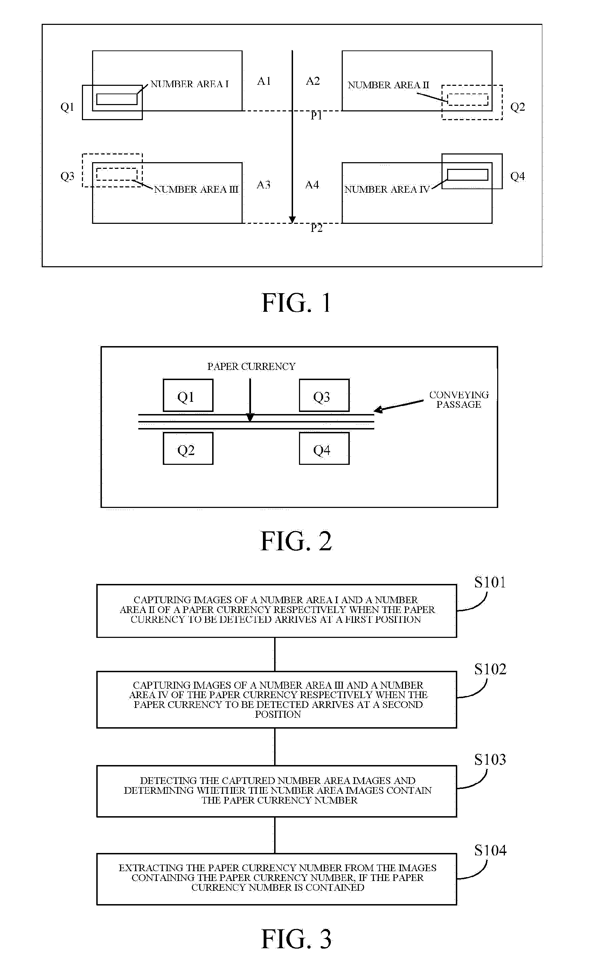

Taking RMB as an example, RMB paper currency only has a number at corner, so there are four possible positions when the number passes the number capturing device disposed on the conveying passage, i.e. the number area I, II, III and IV in FIG.1. As shown in FIG. 1, what A1, A2, A3 and A4 indicate is the situation that the number area on paper currency just passes the image sensor.

As shown in FIG. 1 and FIG. 2, what Q1, Q2, Q3 and Q4 indicate is the position of the image sensor which is predisposed in accordance with the number position on the paper currency. The dotted box represents the number or image sensor is on the other side.

Referring to FIG. 3, the method for obtaining paper currency number provided by this embodiment includes the following steps:
S101: capturing images of a number area I and a number area II of a paper currency respectively when the paper currency to be detected arrives at a predetermined first position, wherein the number area is the area where the number can occur.

When it is detected that the paper currency arrives at predetermined position P1, the image sensors disposed at position Q1 and Q2 capture the image at the number area I and the number area II.

S102: capturing images of a number area III and a number area IV of the paper currency respectively when the paper currency to be detected arrives at a predetermined second position.

As shown in FIGS., when it is detected that the paper currency arrives at predetermined position P2, the image sensors disposed at position Q3 and Q4 capture the image at the number area III and the number area IV.

The number area I and number area IV are on one side of the paper currency, and the number area II and number area III are on the other side of the paper currency.

The image sensors capture the number area images from the layout where the paper currency number is presented.

S103: detecting the captured number area images and determining whether the number area images contain the paper currency number.

The images of captured number area I and II and number area III and IV respectively are recognized to determine whether the number area images contain the paper currency number.

S104: extracting the paper currency number from the images containing the paper currency number, if the paper currency number is contained.

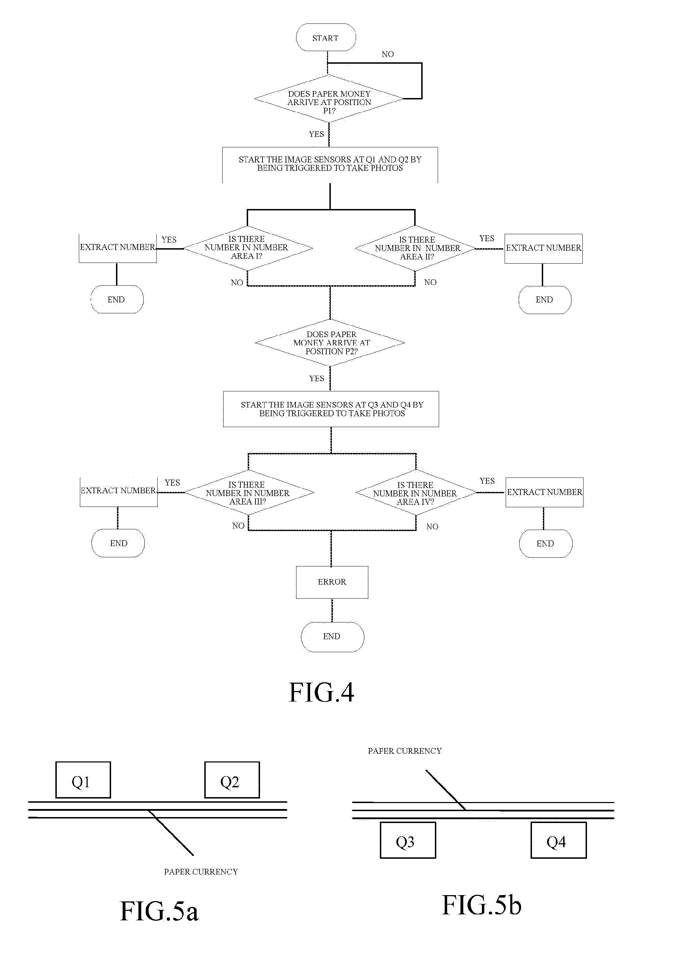

FIG. 4 shows a single paper currency detecting, i.e. number extraction process. For processing flow of multiple paper currencies, the processing flow of the single paper currency is just repeated periodically.

After the paper currency passes the image sensor, in the four images obtained from situation shown in A1, A2, A3 and A4, there must be one containing number part is required to be processed, and the number part is required to be processed can be obtained by determining four times at most, without obtaining denomination and facing direction information in advance.

The number of required number capturing device is determined in accordance with the number layout on the paper currency layout. For example, if the paper currency number is at the middle site, just one or two number capturing devices can be disposed.

### The second embodiment

This embodiment is essentially the same as the first embodiment, and the difference is the flow obtaining the paper currency number needs to perform operation twice, that is, the first operation is similar to the described first embodiment and the second operation is operating again after changing the facing direction of the paper currency. Two number capturing devices (image sensors) can be disposed at positions Q1 and Q3, or positions Q2 and Q4 shown in FIG. 1.

The total number of paper currencies is knowable after the first detection ends. Then for the same bundle of paper currencies, in the course of twice counting them from the obverse side and the reverse side, the order of a certain paper currency when it occurs for the first time and the order of the same paper currency when counting the same bundle from the reverse side must be complementary on the total number of the paper currencies. The position where the number occurs can also be obtained by calculating in accordance with the position when it first occurs. Specifically, Q1 is symmetric with Q3, that is, the number position occurs at Q1 for the first time, and then it occurs at Q3 for the second time, and vice versa. In the same way, Q2 and Q4 are also symmetric.

Accordingly, in this case, the hardware structure is same as the first embodiment and the software flow is changed into performing number recognition twice, with adding a checking process. Specifically, total number of a bundle of paper currencies is set to N, and the order where the paper currency occurs during the detecting for the first time is set to be the Lth, then the order of the paper currency during the counting for the first time, the position where the number first occurs, the order where the same paper currency to be detected occurs for the second time and the position where the same paper currency number occurs during the counting for the second time are shown in Table 1:

**Table 1**

| total number of paper currencies is N | | | |
|---|---|---|---|
| occurring order during the detecting for the first time | the position where the number firstly occurs | occurring order during the detecting for the second time | the position where the number secondly occurs |
| L | Q1 | N-L | Q3 |
| | Q2 | | Q1 |
| | Q3 | | Q4 |
| | Q4 | | Q2 |

The solution provided by this embodiment increases the recognition times so as to increase the recognition accuracy by adopting counting regulation where the hardware structure is not changed.

### The third embodiment

In this embodiment, two number capturing devices are disposed at predetermined site on a paper currency conveying passage of in accordance with the position of paper currency number, as shown in FIG. 5a and FIG. 5b. Two number capturing devices (image sensors) are disposed at positions Q1 and Q2 (or positions Q3 and Q4).

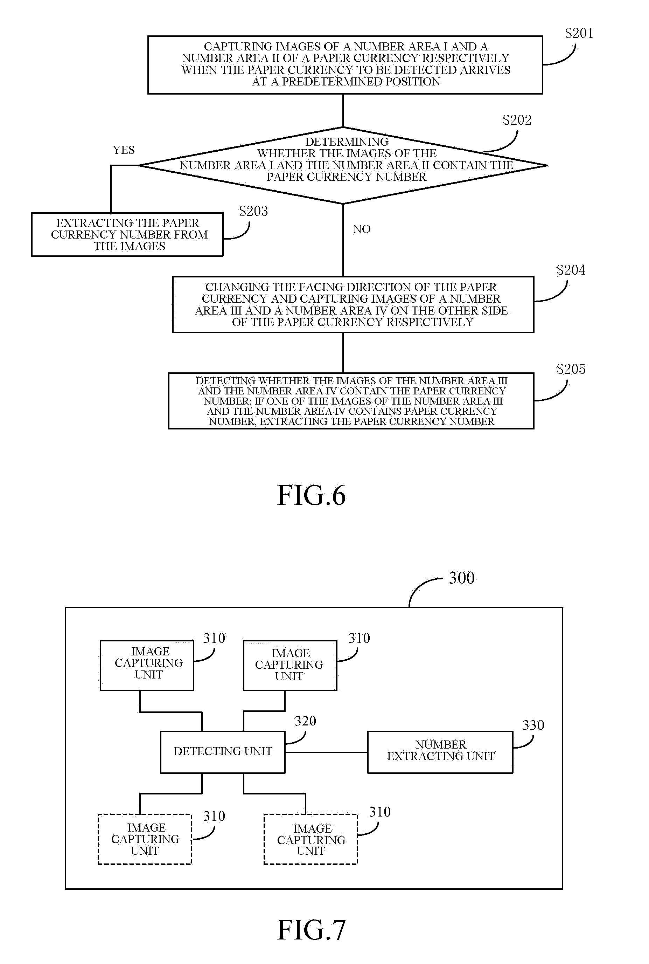

Suppose that the number capturing devices (image sensors) are disposed at position Q1 and Q2, referring to FIG. 6, the method for obtaining paper currency number provided by this embodiment includes:
S201: capturing images of a number area I and a number area II of a paper currency respectively when the paper currency to be detected arrives at a predetermined position.
S202: determining whether the images of the number area I and the number area II contain the paper currency number; if the images contain number, go to step S203; otherwise, go to step S204.
S203: extracting the paper currency number from the images.
S204: changing the facing direction of the paper currency and capturing images of a number area III and a number area IV on the other side of the paper currency respectively.
S205: detecting whether the images of the number area III and the number area IV contain the paper currency number; if one of the images of the number area III and the number area IV contains paper currency number, extracting the paper currency number.

Specifically, since there are twice detecting from the obverse side and the reverse side, for example, counting operation performing by bill counter, if the L1th paper currency occurs number during the counting for the first time, the (N-L1)th paper currency need not to be processed during the counting for the second time. If the L2th paper currency does not occur number (both Q1 and Q2 are not occur) during the counting for the first time, the (N-L2)th paper currency must occur number (at Q1 or Q2) during the counting for the second time.

Similarly, total number is set to N, the order where the number occurs during the counting for the first time is set to be the L1th, and the order where the number does not occur during the counting for the first time is set to be the L2th, as shown in Table 2:

**Table 2**

| total number of paper currencies is N | | | |
|---|---|---|---|
| occurring order during the detecting for the first time | the position where the number occurs | occurring order during the detecting for the second time | the position where the number occurs |
| L1 | S1 | N-L1 | None |
| | S4 | | None |
| L2 | None | N-L2 | S1 or S4 |
| | None | | S4 or S1 |

In addition, the embodiment of this invention further provides a method for recognition paper currency, which includes:

Getting a paper currency number by using the method for obtaining paper currency number provided by this invention;

The method for obtaining paper currency number is described in the above embodiments, which is not described here redundantly.

Recognizing the got paper currency number; and

Performing subsequent paper currency management or process such as anti-false or performing subsequent management process in accordance with recognition results of the paper currency number.

This embodiment saves at least half of the hardware cost of the image capturing device without changing the number recognition rate.

### The fourth embodiment

Referring to FIG. 7, this embodiment provides a paper currency number obtaining device 300, which includes:

Image capturing units 310, which is used for capturing number area images of a paper currency at predetermined site on a paper currency conveying passage in accordance with the layout position of the paper currency number;

A detecting unit 320, which is used for detecting whether the images contain the paper currency number;

A number extracting unit 330, which is used for extracting the paper currency number from the number area images;

If the detecting unit 320 determines that the number area images contain the paper currency number, the number extracting unit 330 extracts the paper currency number from the images.

Specifically, the paper currency number obtaining device 300 provided by this embodiment has four image capturing units 310, which are respectively disposed at site corresponding to four number areas of the paper currency and are used for obtaining four number area images of the paper currency to be detected.

Herein, a first image capturing unit and a second image capturing unit are disposed at one side of the paper currency passage and are used for capturing the images of a first number area and a second number area on the paper currency.

Herein, a third image capturing unit and a fourth image capturing unit are disposed at the other side of the paper currency passage and are used for capturing the images of a third number area and a fourth number area on the other side of the paper currency.

The detecting unit 320 determines one of the images obtained by the image capturing units 310 contains the paper currency number, and provides the image containing the paper currency number to the number extracting unit.

The paper currency number obtaining device further disposes a position monitoring unit (not shown), which is used for detecting and determining whether the paper currency or ticket arrives at predetermined position so as to start the image capturing units to capture the number area images.

In addition, the paper currency number obtaining device 300 provided by this embodiment may dispose two image capturing units 310, which are respectively disposed at both sides of the paper currency conveying passage and are used for capturing the number area images on both the obverse side and the reverse side of the paper currency when the paper currency or ticket arrives at the predetermined position.

### The fifth embodiment

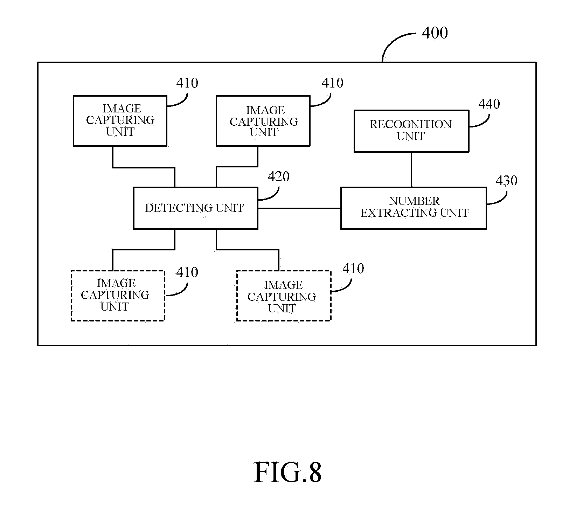

Referring to FIG. 8, this embodiment further provides a paper currency recognition device 400, which includes:

Image capturing units 410, which is used for capturing number area images of a paper currency at predetermined site on a paper currency conveying passage in accordance with the layout position of the paper currency number;

A detecting unit 420, which is used for detecting whether the number area images contain the paper currency number;

A number extracting unit 430, which is used for extracting the paper currency number from the number area images;

If the detecting unit 420 determines that the number area images contain the paper currency number, the number extracting unit 430 extracts the paper currency number from the number area images;

A recognition unit 400, which is used for recognizing the extracted paper currency number so as to perform subsequent management process in accordance with recognition results of the paper currency numbers.

The person skilled in the art may understand the technical solution for obtaining paper currency number provided by this invention may be applied to tickets having number, for example, serial number. Specific steps are essentially the same as those described above, which are not described here redundantly.

Comparing this invention which captures the images of part of paper currency or ticket (number area images) with prior art which captures the images of full paper currency or ticket, in respect of processing load and resolution, taking RMB 100 yuan as an example, the size of which is 156mm×77mm=12012, while the size is 40mm×35mm when capturing the number area images with this invention (considering the case of shift and jitter of the paper money) and the resolution is 40mm × 35mm × 4=5600 if calculated based on area, so the resolution lost at least more than one time in prior art.

The difference in compatibility for velocity changing and jitter between the image sensor that can be triggered to take photos and the line scanning image sensor is adopted.

Traditionally, images are obtained by line by line scanning mode, while the image sensor with the mode of being triggered to take photos and overall exposure is used in this invention. To obtain stable images, it is required that the velocity of paper money is stable during an exposure time when the paper money moving through an image sensor, and using line by line scanning mode, it is required that the paper money keeps a stable velocity during the whole process that it passes the sensor. In the image sensor with the mode of being triggered to take photos and overall exposure of this invention, the requirement for exposure time is about 180us, while using the line by line scanning mode, the time when a paper money passing the whole sensor is about 30-60ms. Obviously, the stability requirement for paper money motion in traditional line by line scanning mode is much stricter than that in image sensor of this invention.

In conclusion, in the method and device for obtaining paper currency or ticket number provided by this invention, a number capturing device is disposed at a "necessary path" of paper currency serial number for capturing the area images where the number on paper currency or ticket can occur. Thus, only the areas that can contain number are exacted so that redundant information quantity need to be processed is minimum and the resolution in area to be recognized, thereby increasing information quantity and improving recognition accuracy. This invention obtains a plurality of images from a plurality of areas where number can occur and selects one or more area correctly containing number just by simply processing for further processing, without adding hardware module or letting paper currency pass image recognition module twice to get denomination and facing direction information in advance. This invention also uses an image sensor which can be triggered to take photos and overall exposure output, which is maximumly compatible with the case of image quality degradation brought by velocity changing and jitter when paper currency passes the image module, ensuring number recognition has a large consistency and much higher velocity and recognition rate. This invention can still raise recognition rate level of the system as a whole by the convenience brought by operation flow and mechanism structure and by performing recognition for several times for the same number area.

According to the disclosed embodiments, the person skilled in the art is enabled to implement or carry out the present invention. As for the person skilled in the art, various modifications to these embodiments are apparent, and the general principles defined herein can also be applied to other embodiments without departing from the scope and gist of the present invention. The embodiments described above are only the preferred embodiments of the present invention, and do not limit the present invention in any way. All of the modifications, equivalents, improvements or the like within the spirit and principle of the present invention should fall within the protection scope of the present invention.

## Claims

1. A paper currency or ticket number obtaining method, **characterized in that** a number capturing device is disposed at a predetermined site on a paper currency or ticket conveying passage in accordance with a layout position of a paper currency or ticket number, the method comprising:
capturing images of number areas of the paper currency or ticket when the paper currency or ticket to be detected arrives at a predetermined position, wherein the number areas are areas where the number can occur;
detecting the captured number area images and determining whether the number area images contain the paper currency or ticket number; and if the paper currency or ticket number is contained, extracting the number from the images containing the paper currency or ticket number.

2. The method according to Claim 1, **characterized in that** the method further comprises:
if the number area images do not contain the number, changing the facing direction of the paper currency or ticket and capturing number area images on the other side of the paper currency or ticket; and
if the number area images contain the number, extracting the number.

3. The method according to Claim 1, **characterized in that** if the paper currency or ticket number is at corner of layout, there are four number areas; wherein a first number area and a fourth number area are on one side of the paper currency or ticket, and a second number area and a third number area are on the other side of the paper currency or ticket;
capturing images of the first number area and the second number area of the paper currency or ticket respectively when the paper currency or ticket to be detected arrives at a predetermined first position;
capturing images of the third number area and the fourth number area of the paper currency or ticket respectively when the paper currency or ticket to be detected arrives at a predetermined second position; and
capturing the number area images from the layout where the paper currency or ticket number is presented.

4. The method according to Claim 1, **characterized in that** the method further comprises:
detecting and determining whether the paper currency or ticket to be detected arrives at the predetermined position by a light sensor.

5. The method according to Claim 1, **characterized in that** total number of paper currencies to be detected is N, and the paper currencies or tickets to be detected are detected twice:
the number occurs at the Lth paper currency or ticket during the detecting for the first time, L=1, 2, ···, N;
changing the facing direction of the paper currencies or tickets for detecting for the second time, the number occurring at the Lth paper currency or ticket during the detecting for the first time occurs at the (N-L)th during the detecting for the second time; and
comparing and calibrating the number of the Lth paper currency or ticket during the detecting for the first time with the number of the (N-L)th paper currency or ticket during the detecting for the second time to determine the number.

6. The method according to Claim 1, **characterized in that** the range of the number area is determined in accordance with the size of the paper currency or ticket number.

7. A paper currency or ticket recognition method, **characterized in that** the method comprises:
getting a paper currency or ticket number by using the paper currency or ticket number obtaining method according to any one of Claims 1 to 5;
recognizing the got paper currency or ticket number; and
performing subsequent process in accordance with recognition results of the number.

8. A paper currency or ticket number obtaining device, **characterized in that** the device comprises:
image capturing units for capturing number area images of a paper currency or ticket at a predetermined site on a paper currency conveying passage in accordance with a layout position of a paper currency or ticket number;
a detecting unit for detecting whether the number area images contain the paper currency or ticket number; and
a number extracting unit for extracting the paper currency or ticket number from the number area images;
if the detecting unit determines that the number area images contain the paper currency or ticket number, the number extracting unit extracts the paper currency or ticket number from the images.

9. The device according to Claim 8, **characterized in that** if the paper currency or ticket number is at corner of layout, there are four number areas, and the device have four image capturing units respectively disposed at sites corresponding to the four number areas and used for obtaining four number area images;
wherein a first image capturing unit and a second image capturing unit are disposed at one side of the paper currency or ticket passage and are used for capturing the images of a first number area and a second number area of the paper currency or ticket;
wherein a third image capturing unit and a fourth image capturing unit are disposed at the other side of the paper currency or ticket passage and are used for capturing the images of a third number area and a fourth number area on the other side of the paper currency or ticket; and
the detecting unit determines that one of the images obtained by the image capturing units contains the paper currency or ticket number, and provides the image containing the paper currency or ticket number to the number extracting unit.

10. The device according to Claim 8, **characterized in that** the device further comprises:
at least two image capturing units, respectively disposed at both sides of the paper currency or ticket conveying passage, for capturing the number area images on both obverse and reverse sides of the paper currency or ticket when the paper currency or ticket arrives at a predetermined position.

11. The device according to Claim 8, **characterized in that** the device further comprises:
a position monitoring unit for detecting and determining whether the paper currency or ticket arrives at a predetermined position so as to start the image capturing units to capture the number area images.

12. A paper currency or ticket recognition device, **characterized in that** the device comprises:
image capturing units for capturing number area images of a paper currency or ticket at predetermined site on a paper currency or ticket conveying passage in accordance with a layout position of a paper currency or ticket number;
a detecting unit for detecting whether the number area images contain the number;
a number extracting unit for extracting the number from the number area images;
if the detecting unit determines that the number area images contain the number, the number extracting unit extracts the number from the images; and
a recognition unit for recognizing the extracted number so as to provide the recognition results for subsequent processing.
